# DEMANDE DE BREVET EUROPEEN

(11) **EP 1 376 209 A1**
(43) Date de publication de la demande: **02.01.2004**
(21) Numéro de dépôt: 02077493.1
(22) Date de dépôt: 21.06.2002
(51) Int. Cl.: G02F 1/1339

(54) **Procédé de fabrication d'un dispositif délimitant un volume pour le confinement d'un fluide ou d'une matière sensible**

(71) Demandeur: ASULAB S.A., 2074 Marin (CH)
(72) Inventeur: Gilles, Rey-Mermet, 2525 Le Landeron (CH)
(74) Mandataire: Ravenel, Thierry Gérard Louis

(57) **Abrégé**

La présente invention concerne un procédé de fabrication d'un dispositif (2, 30, 48) délimitant un volume (8) pour le confinement d'un fluide ou d'une matière sensible susceptible de changer de propriétés physiques, notamment optiques, sous l'effet de l'application d'une tension, ou de propriétés électriques sous l'effet d'une contrainte ou d'un rayonnement, ce dispositif (2, 30, 48) comprenant au moins un premier substrat avant (4, 38, 56) et au moins un second substrat arrière (6, 32, 50) maintenus à une distance constante l'un de l'autre, ces deux substrats (6, 32, 50; 4, 38, 56) étant réunis par un joint de scellement (24, 46, 72) qui définit le volume (8) pour le confinement du milieu sensible ou du fluide,
ce procédé étant caractérisé en ce qu'il comprend les étapes consistant à :
- structurer sur l'un des substrats (6, 32, 50) au moins une cloison (12, 44, 66) qui délimite par sa face latérale interne le volume (8) pour le confinement du milieu sensible ou du fluide;
- réunir le second substrat (4, 38, 56) avec le premier substrat (6, 32, 50);
- introduire une matière de scellement susceptible de s'écouler dans l'interstice (22) défini par la face latérale externe de la cloison (12, 44, 66) et les deux substrats superposés (6, 32, 50; 4, 38, 56) jusqu'à ce qu'au moins une partie du volume de cet interstice (22) soit occupée par la matière de scellement, et
- solidifier la matière de scellement afin que celle-ci forme le joint de scellement (26, 46, 72).

## Description

La présente invention concerne un procédé de fabrication d'un dispositif tel que des cellules d'affichage électro-optiques ou des cellules photovoltaïques électrochimiques. La présente invention concerne également certains types de microsystèmes mieux connus sous leur dénomination anglo-saxonne "Micro Electro Mechanical Systems" ou "MEMS".

Une première catégorie connue de cellules photovoltaïques convertit la lumière en électricité en exploitant l'effet photovoltaïque qui apparaît à la jonction de matériaux semi-conducteurs. Le matériau semi-conducteur remplit en même temps les fonctions d'absorption de la lumière et de séparation des charges électriques résultantes (électrons et trous). Le matériau doit être de grande pureté, exempt de défaut, faute de quoi électrons et trous se recombinent avant d'avoir pu être séparés.

La présente invention vise un second type de cellules photovoltaïques dites électrochimiques qui comprennent un matériau semi-conducteur qui est normalement insensible à la lumière visible en raison de la largeur de sa bande interdite, et qui ne commence à absorber que dans le proche ultraviolet. Un tel matériau peut néanmoins être sensibilisé par l'adsorption d'un colorant tel qu'un complexe d'un métal de transition qui permet un taux de conversion entre un photon incident et un électron approchant l'unité. Après avoir été excité par l'absorption d'un photon, le colorant peut transférer un électron dans la bande de conduction du matériau semi-conducteur. Le champ électrique régnant au sein du matériau semi-conducteur permet l'extraction de cet électron. Après transfert de l'électron, le colorant retourne à l'état fondamental oxydé. La recombinaison entre l'électron dans la bande de conduction du matériau semi-conducteur et le trou sur le colorant oxydé est beaucoup plus lente que la réduction du colorant oxydé par un médiateur. De ce fait, la séparation de charge est efficace.

Les cellules du genre décrit ci-dessus comprennent généralement un premier substrat avant transparent et un second substrat arrière également transparent ou non. Ces deux substrats comportent chacun sur leurs faces en regard une première électrode encore appelée contre-électrode, et une seconde électrode habituellement connue sous le nom de photo-électrode. Ces électrodes sont destinées à être reliées à un circuit d'alimentation électrique et sont classiquement réalisées sous la forme d'une couche mince d'un oxyde conducteur transparent tel qu'un mélange d'oxyde d'indium/étain ou d'oxyde d'étain/antimoine.

Les deux substrats sont réunis entre eux par un cadre de scellement qui s'étend le long du périmètre de ceux-ci. Ce cadre de scellement définit un volume étanche pour le confinement du matériau semi-conducteur déposé en couche sur l'un des substrats et d'un électrolyte contenant le médiateur susmentionné.

La présente invention vise également les cellules d'affichage dites électro-optiques, en particulier à cristaux liquides, qui, de manière analogue aux cellules photovoltaïques électrochimiques, comprennent :
- un premier substrat avant transparent dont la surface supérieure constitue la face avant de la cellule;
- un second substrat arrière, également transparent ou non, dont la surface inférieure constitue la face arrière de ladite cellule;
- les substrats comportant chacun sur leurs faces en regard au moins une électrode, ces électrodes étant destinées à être reliées à un circuit de commande de l'affichage qui, par application de tensions électriques appropriées à des électrodes sélectionnées, est en mesure de modifier les caractéristiques de transmission ou de réflexion d'un milieu optiquement actif;
- les substrats étant réunis par un cadre de scellement délimitant un volume étanche pour le confinement du milieu optiquement actif, et
- des moyens de connexion pour établir la liaison électrique entre chaque électrode et le circuit de commande de l'affichage.

Les cadres de scellement assurent l'herméticité des bords des cellules afin de confiner efficacement le milieu actif que de telles cellules renferment, et de protéger ce milieu des phénomènes de diffusion de gaz provenant de l'atmosphère environnante qui peuvent compromettre la pérénité des cellules.

Habituellement, le dépôt des cadres de scellement s'effectue par sérigraphie, procédé dont la mise en oeuvre peut détériorer de façon irrémédiable toutes les structures fragiles telles que les connexions électriques ou les espaceurs qui ont déjà été déposées au moment où intervient l'étape de sérigraphie. En effet, la technique de sérigraphie qui consiste, rappelons-le, à déposer un matériau à consistance pâteuse à travers les mailles non obturées d'un écran, par exemple en nylon ou en acier inoxydable, à mailles très fines à l'aide d'une raclette actionnée à la main ou mécaniquement, est une technique dont la mise en oeuvre engendre des contraintes mécaniques non négligeables qui sont souvent préjudiciables aux structures avoisinantes déjà déposées telles que les couches d'alignement, les barres d'espacement ou encore les connexions électriques.

Comme on le sait, les espaceurs sont destinés à maintenir un espacement constant entre les deux substrats des cellules et à conférer à ces dernières une rigidité mécanique satisfaisante. Dans les procédés connus à ce jour, le maintien de la distance entre les deux substrats est généralement assuré par des billes ou des fibres discontinues de dimensions géométriques parfaitement contrôlées, répandues sur l'un des substrats avant mise en place du second substrat. Cette technique initiale présente certains inconvénients tels que, notamment, un prix élevé et un positionnement aléatoire des billes qui peuvent constituer, au coeur des pixels d'un affichage matriciel, des centres de diffusion optique détériorant l'aspect de l'afficheur. Il a donc été proposé de remplacer ces billes par des espaceurs continus obtenus en déposant une couche d'un matériau photorésist de l'épaisseur voulue sur l'un des substrats, cette couche étant ensuite structurée pour lui donner la forme des espaceurs recherchés. Cette dernière technique est seule capable d'assurer la rigidité mécanique nécessaire pour certains types de cristaux liquides. Elle permet en outre d'éviter les phénomènes de diffusion optique susmentionnés qui dégradent l'aspect des afficheurs dans la mesure où les espaceurs peuvent être déposés de manière sélective en des endroits choisis à l'avance, notamment en dehors des pixels. Enfin, les espaceurs structurés par photolithographie peuvent présenter un pouvoir adhésif permettant d'assembler les deux substrats ensemble.

Comme on l'aura compris de ce qui précède, les espaceurs jouent un rôle particulièrement déterminant dans le bon fonctionnement des cellules à milieu optiquement ou électro-optiquement actif auxquelles la présente invention s'intéresse. Malheureusement, ces espaceurs, lorsqu'ils sont réalisés en photorésist, peuvent être endommagés de façon irrémédiable lors du dépôt par sérigraphie du cadre de scellement.

Un autre inconvénient qui pèse sur les techniques de dépôt par sérigraphie des cadres de scellement réside dans le fait qu'il est difficile de contrôler avec précision les dimensions finales de tels cadres. En effet, lorsqu'on applique le substrat supérieur sur le substrat inférieur, la matière de scellement s'écrase et a tendance à s'étaler sous l'effet de la pression exercée, de sorte que la largeur du cadre de scellement ne peut être contrôlée qu'avec une précision qui est typiquement de l'ordre du dixième de millimètre. Par ailleurs, la paroi intérieure des cadres de scellement déposés par sérigraphie qui est en contact avec le cristal liquide présente habituellement des irrégularités de forme, de sorte qu'il faut ménager ces cadres à une distance suffisante des électrodes afin qu'ils n'empiètent pas sur ces dernières. Une telle situation peut être acceptable si l'on dispose d'un espace suffisant entre les bords de la cellule d'où émergent les connexions et la zone active proprement dite de cette cellule. Par contre, dès que l'on cherche à réduire les dimensions de la zone morte réservée à la connectique afin d'optimiser la surface de la zone d'affichage de la cellule ou pour répondre à des problèmes d'encombrement, la précision offerte par les techniques de sérigraphie n'est plus suffisante.

La présente invention vise enfin des microsystèmes de type fluidique tels que des capteurs de pression, des micropompes ou encore des micromélangeurs destinés à canaliser de façon contrôlée l'écoulement de fluides. Ces microstructures présentent en effet bon nombre d'analogies avec les cellules d'affichage à cristaux liquides et les cellules photovoltaïques électrochimiques. Elles comprennent, en particulier, deux substrats séparés l'un de l'autre d'une distance constante et entre lesquels sont ménagés des canaux. Ces canaux, à l'intérieur desquels circulent les fluides liquides ou gazeux, sont classiquement usinés par gravure dans le volume desdits substrats. Lors de l'assemblage des substrats qui peut se faire, par exemple, par soudage anodique, la nature des matériaux à l'aide desquels lesdits substrats sont réalisés impose souvent de fortes contraintes, en particulier en termes de température de soudage et de tensions électriques appliquées. Ces contraintes peuvent être préjudiciables aux structures déjà déposées sur les substrats avant soudage.

La présente invention a pour but de remédier aux problèmes susmentionnés ainsi qu'à d'autres encore en procurant un procédé de fabrication, notamment d'une cellule d'affichage à cristaux liquides, qui soit facile à mettre en oeuvre et qui limite surtout les risques de détériorer des éléments de la cellule déjà déposés.

La présente invention a également pour objet un dispositif à milieu optiquement ou chimiquement actif qui permette, en particulier, la mise en oeuvre du procédé selon l'invention.

A cet effet, et selon son premier aspect, la présente invention concerne un procédé de fabrication d'un dispositif délimitant un volume pour le confinement d'un fluide ou d'une matière sensible susceptible de changer de propriétés physiques, notamment optiques, sous l'effet de l'application d'une tension, ou de propriétés électriques sous l'effet d'une contrainte ou d'un rayonnement, ce dispositif comprenant au moins un premier substrat avant et au moins un second substrat arrière maintenus à une distance constante l'un de l'autre, ces deux substrats étant réunis par un joint de scellement qui définit le volume pour le confinement du milieu sensible ou du fluide,
ce procédé étant caractérisé en ce qu'il comprend les étapes consistant à :
- structurer sur l'un des substrats au moins une cloison qui délimite par sa face latérale interne le volume pour le confinement du milieu sensible ou du fluide;
- réunir le second substrat avec le premier substrat;
- introduire une matière de scellement susceptible de s'écouler dans l'interstice défini par la face latérale externe de la cloison et les deux substrats superposés jusqu'à ce qu'au moins une partie du volume de cet interstice soit occupée par la matière de scellement, et
- solidifier la matière de scellement afin que celle-ci forme le joint de scellement.

Grâce à ces caractéristiques, la présente invention procure un procédé de fabrication de dispositifs tels que, notamment, des cellules d'affichage à cristaux liquides, qui permet d'enrober avec la matière de scellement des structures fragiles préalablement déposées telles que des éléments de connexion, limitant ainsi grandement les risques de détériorer de telles structures. Un tel résultat serait également difficile à obtenir par sérigraphie sans risque d'aboutir, localement, à une surépaisseur qui conduirait inévitablement à un espacement imprécis entre les deux substrats lors de l'assemblage qui suit.

Selon une première variante de mise en oeuvre du procédé de l'invention, on dépose sur l'un des substrats une couche d'un matériau photorésist que l'on va ensuite structurer par des techniques de photogravure pour lui donner la forme d'une ou de plusieurs cloisons.

La présente invention fait ainsi appel à des techniques simples et couramment employées dans le domaine de la fabrication de cellules telles que les cellules d'affichage à cristaux liquides. Ces techniques sont donc parfaitement maîtrisées. En particulier, le procédé selon l'invention permet de contrôler avec une grande précision la largeur des cadres de scellement de même que le positionnement de la paroi intérieure desdits cadres qui est en contact avec le cristal liquide, ce qui n'est pas le cas avec les procédés de type sérigraphique. D'autre part, les techniques photolithographiques auxquelles l'invention a recours n'engendrent aucune contrainte mécanique lors de leur mise en oeuvre, ce qui est très favorable aux éléments de la cellule déjà déposés et qui ne risquent plus d'être détériorés ou mis hors d'usage en cours de fabrication.

Selon une seconde variante de mise en oeuvre du procédé de l'invention, la ou les cloisons sont structurées par sérigraphie.

En effet, dans le cas où la cloison n'a pas besoin d'être réalisée avec une grande précision, par exemple lorsqu'on peut disposer d'un espace suffisant pour réaliser les plages de connexion d'une cellule à cristaux liquides, on peut quand même avoir recours à un procédé de type sérigraphique.

Selon encore une autre variante de mise en oeuvre du procédé de l'invention, les cloisons sont formées au moyen d'un distributeur de matière photorésistive du type seringue.

Selon une autre caractéristique de l'invention, la couche de photorésist est structurée de façon à former, non seulement la ou les cloisons, mais également des espaceurs destinés à maintenir un écartement constant entre les deux substrats de la cellule.

Grâce à cette autre caractéristique, la présente invention permet de structurer au cours d'une seule et unique étape de fabrication les espaceurs et les parois, ce qui permet de réaliser des gains de temps et donc d'argent non négligeables. Surtout, les espaceurs ne risquent plus d'être endommagés lors d'une l'étape ultérieure de fabrication du cadre de scellement comme tel était le cas dans l'art antérieur. En outre, les espaceurs et les parois sont réalisés au moyen du même matériau, ce qui contribue encore davantage à la simplification du présent procédé.

Selon son deuxième aspect, la présente invention concerne un procédé de fabrication d'un dispositif du genre susdécrit, caractérisé en ce qu'il comprend les étapes consistant à :
- structurer sur l'un des substrats au moins un canal de remplissage délimité par deux cloisons qui s'étendent à distance l'une de l'autre;
- réunir le second substrat avec le premier substrat;
- introduire une matière de scellement susceptible de s'écouler dans le canal de remplissage jusqu'à ce tout le volume dudit canal de remplissage soit occupé, et
- solidifier la matière de scellement afin que celle-ci forme le joint de scellement.

Enfin, la présente invention concerne également un dispositif délimitant un volume pour le confinement d'un fluide ou d'une matière sensible susceptible de changer de propriétés physiques, notamment optiques, sous l'effet de l'application d'une tension, ou de propriétés électriques sous l'effet d'une contrainte ou d'un rayonnement, ce dispositif comprenant au moins un premier substrat avant et au moins un second substrat arrière maintenus à une distance constante l'un de l'autre, ces deux substrats étant réunis par un joint de scellement qui définit le volume pour le confinement du milieu sensible ou du fluide, ce dispositif étant caractérisé en ce qu'il comprend un canal de remplissage délimité par deux parois qui s'étendent à distance l'une de l'autre sur le substrat sur lequel ces parois sont formées, au moins un trou communiquant avec le canal de remplissage étant percé dans l'un des substrats.

Grâce à cette caractéristique, il est possible de remplir les canaux de remplissage, non pas par le côté, par exemple de cellules à cristaux liquides, mais par le dessus de ces dernières. On peut donc travailler avec un lot complet de telles cellules, sans être obligé de diviser ce lot en bandes pour pouvoir avoir accès aux trous de remplissage qui sont habituellement ménagés sur un des côtés des cellules. Les cellules peuvent donc être pratiquement terminées en lot avant découpage. On peut notamment effectuer le remplissage et le scellement des trous d'amenée de la matière de scellement destinée à former les cadres de scellement des cellules sur le lot entier, donc d'une façon plus simple et plus économique que sur des cellules individuelles.

D'autres caractéristiques et avantages de la présente invention ressortiront plus clairement de la description détaillée qui suit d'un exemple de mise en oeuvre du procédé selon l'invention, cet exemple étant donné à titre purement illustratif et non limitatif seulement, en liaison avec le dessin annexé sur lequel :
- la figure 1 est une vue de dessus d'une cellule sur laquelle est notamment représenté le canal de remplissage destiné à recevoir une matière de scellement fluide pour former le cadre de scellement de cette cellule et le trou d'amenée correspondant de la matière de scellement;
- la figure 2 est une vue en perspective de la cellule représentée à la figure 1, le substrat de verre supérieur ayant été omis pour des raisons de clarté;
- la figure 3 est une vue en perspective avec arrachement partiel du substrat supérieur montrant le volume délimité par les deux substrats superposés et la face externe d'une cloison réalisée conformément au procédé selon l'invention;
- la figure 4 est une représentation schématique d'un microsystème fluidique de type capteur de pression piézorésistif;
- la figure 5 est une vue en coupe longitudinale d'un microsystème fluidique du type micropompe, et
- la figure 6 est une vue de dessus de la micropompe représentée à la figure 5.

La présente invention procède de l'idée générale inventive qui consiste à proposer une nouvelle méthode de fabrication des cadres de scellement qui réunissent classiquement les substrats inférieurs et supérieurs de cellules d'affichage, notamment à cristaux liquides, ou de cellules photovoltaïques électro-chimiques. Conformément à cette nouvelle méthode, on remplace la technique de dépôt par sérigraphie des cadres de scellement qui intervient habituellement à un stade avancé de la fabrication des cellules et qui engendre des contraintes mécaniques qui peuvent être néfastes pour les structures avoisinantes desdites cellules déjà déposées, par une technique de photolithographie qui n'engendre aucune contrainte particulière et qui permet, en particulier, de structurer en même temps les espaceurs et les canaux de remplissage destinés à recevoir une matière de scellement fluide qui, après solidification, formera les cadres de scellement recherchés. La présente invention offre également une nouvelle technique d'assemblage et de scellement des substrats d'un microsystème de type fluidique.

La présente invention va être décrite en liaison avec une cellule d'affichage à cristaux liquides. Il va de soi que l'invention n'est pas limitée à un tel type de cellule et qu'elle peut s'appliquer à tout type de cellule d'affichage comprenant un milieu optiquement actif ainsi qu'aux cellules photovoltaïques électrochimiques du genre décrit dans la partie introductive de la présente demande de brevet. De même, la présente invention s'applique à des microsystèmes de type fluidique.

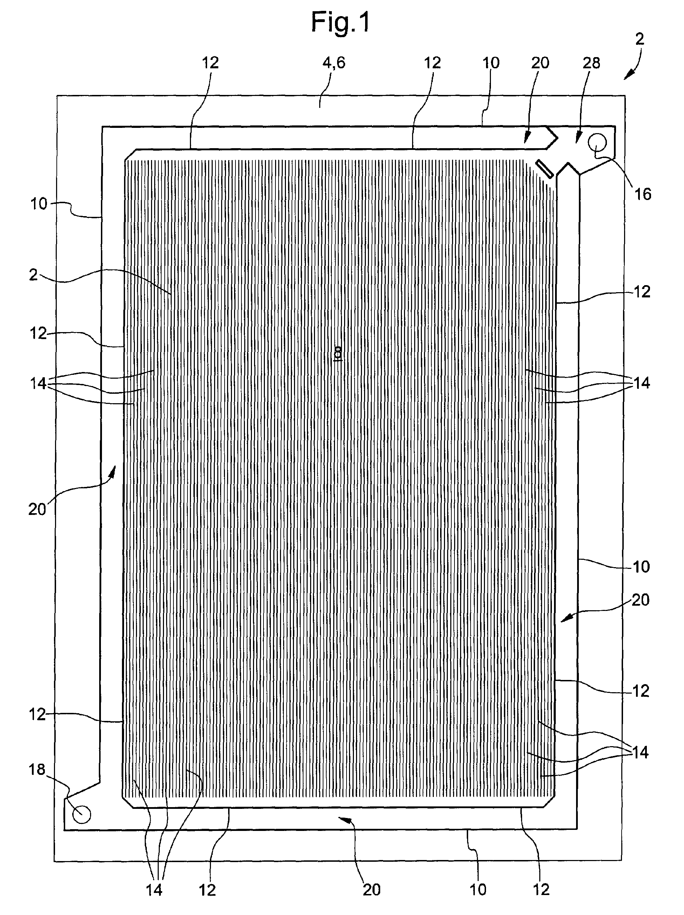

La figure 1 est une vue en plan d'une cellule à cristaux liquides 2 en cours de fabrication, cette cellule étant formée par un ensemble de deux substrats superposés 4 et 6, par exemple des substrats de verre, dont le substrat avant 4 est transparent, tandis que le substrat arrière 6 peut être également transparent ou non.

On voit sur la figure 1 que la cellule 2 définit une cavité 8 destinée à renfermer les cristaux liquides, cette cavité 8 étant délimitée par les substrats 4 et 6 et par des cloisons étanches 10 et 12 destinées à recevoir une matière de scellement qui fixe lesdits substrats 4 et 6 l'un à l'autre comme cela va être décrit en détail ci-dessous. La cavité 8 contient également une multiplicité de structures ou barres d'espacement 14 destinées à maintenir un écartement constant entre les substrats 4 et 6 sur toute l'étendue de la cellule 2 et à conférer à cette dernière une rigidité mécanique adaptée. Enfin, un trou 16 pour le remplissage de la cavité 8 avec du cristal liquide, et au moins un trou 18 pour l'amenée de la matière de scellement sont pratiqués dans le substrat avant 4.

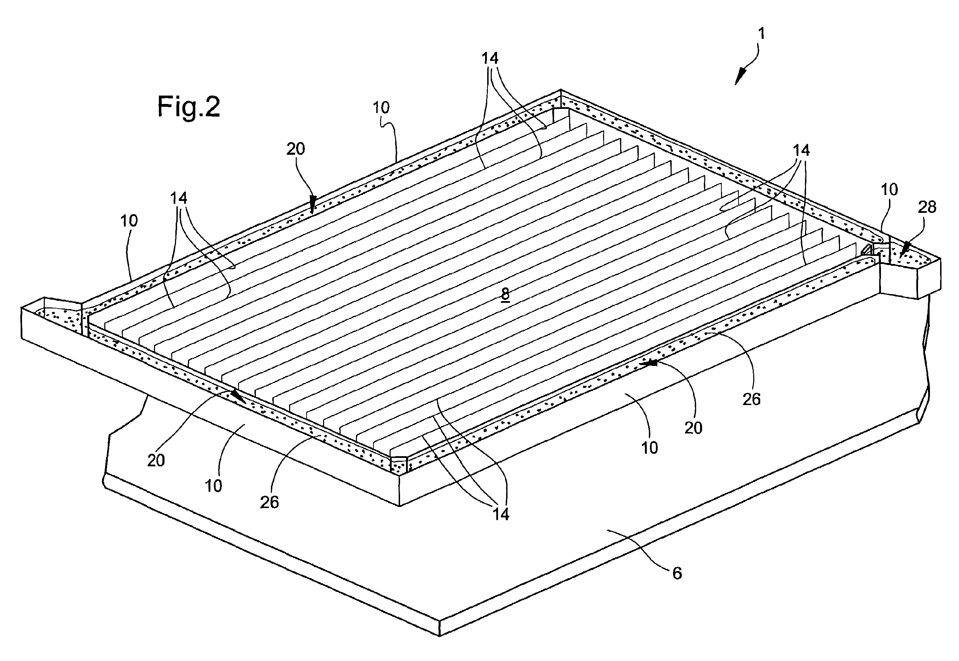

Dans l'exemple représenté à la figure 1, on voit que la cloison étanche 10 suit un contour extérieur entre les deux substrats de verre superposés 4 et 6, tandis que la cloison 12 suit le contour intérieur de la cellule à cristaux liquides 2, de sorte que la cloison extérieure 10 entoure la cloison intérieure 12. Ainsi, ces cloisons 10 et 12 qui se présentent sous la forme de parois sensiblement verticales s'étendant parallèlement l'une par rapport à l'autre, sont en contact direct pour l'une 10, avec l'atmosphère extérieure, et pour l'autre 12 avec le cristal liquide. Elles forment avantageusement un canal de remplissage 20 qui peut être vu sur la figure 1 et mieux encore sur la figure 2. Ce canal 20 est destiné à être rempli avec une matière de scellement pour former le cadre de scellement de la cellule 2 et se révélera particulièrement avantageux notamment lors de la fabrication en série de cellules conformes à la présente invention.

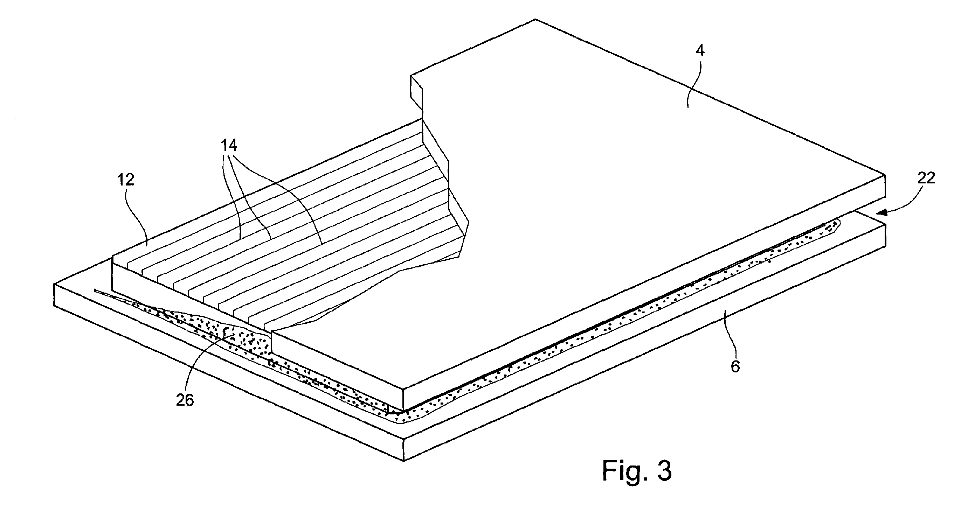

On comprendra, bien entendu, que la paroi 10 peut être omise, seule la paroi 12 qui est en contact avec le cristal liquide étant conservée. Dans ce cas, après structuration de ladite paroi 12 et positionnement du substrat supérieur 4 sur le substrat inférieur 6, on introduira la matière de scellement dans l'interstice 22 défini par la face latérale externe de la cloison 12 et les deux substrats superposés 4 et 6 jusqu'à ce qu'au moins une partie du volume de cet interstice 22 soit occupée par ladite matière de scellement comme représenté à la figure 3.

Cette opération peut être réalisée au moyen d'un distributeur de matière de scellement mieux connu sous sa dénomination anglo-saxonne "dispenser". Le distributeur sera déplacé le long d'au moins une partie du pourtour des deux substrats 4 et 6, de façon à former un cordon de matière de scellement 26 qui, s'appuyant contre la face latérale externe de la cloison 12 et réunissant lesdits deux substrats 4 et 6, constituera le cadre de scellement. Il n'est pas nécessaire que le cordon de matière de scellement 26 s'étende jusqu'aux bords des deux substrats 4 et 6. Il suffit qu'il soit suffisamment large pour jouer le rôle d'un cadre de scellement, c'est-à-dire isoler la matière sensible de l'environnement extérieur, empêcher de même celle-ci de fuir vers l'extérieur de la cellule et maintenir ensemble les deux substrats 4 et 6.

Pour déposer le cordon de matière de scellement 26, on peut également tremper l'un des bords de la cellule 2 délimitée par les deux substrats 4 et 6 superposés dans un récipient contenant ladite matière de scellement. Par capillarité, la matière de scellement va venir progressivement combler le volume vacant 22 situé à l'extérieur du périmètre de la cloison 12. Une autre possibilité encore consiste à injecter la matière de scellement entre les deux substrats 4 et 6 via un trou de remplissage percé dans l'un desdits substrats 4 ou 6 à l'extérieur du périmètre de la cloison 12.

Conformément à l'invention, après avoir déposé sur la face interne de l'un des deux substrats 4 ou 6 toutes les structures nécessaires au bon fonctionnement de la cellule 2 à venir telles que, par exemple, des électrodes ou bien encore une couche d'alignement, on recouvre ce substrat d'une couche de matériau photorésist. Cette couche de photorésist est ensuite structurée par des techniques de photogravure classiques pour lui donner la forme du canal de remplissage 20 susmentionné délimité par les cloisons 10 et 12. Une fois obtenu le canal de remplissage 20, le substrat restant, également convenablement apprêté, est réuni avec le premier substrat. Selon une variante, on peut également envisager de structurer la cloison 10 sur l'un des substrats 4 ou 6 et la cloison 12 sur l'autre substrat.

Selon une variante du procédé, la couche de photorésist est structurée de façon à former, non seulement le canal de remplissage 20, mais également les espaceurs 14 destinés à maintenir un espacement constant entre les deux substrats 4 et 6. Grâce à la présente invention, il est ainsi possible de structurer en une seule étape de fabrication les structures d'espacement et le canal de remplissage. Outre les gains en temps et en argent qu'un tel procédé permet de réaliser, un autre avantage de cette variante de mise en oeuvre du procédé selon l'invention réside dans le fait que, comme les espaceurs et le cadre de scellement sont réalisés de manière concomitante, lesdits espaceurs ne risquent plus d'être endommagés lors d'une étape ultérieure de fabrication du cadre de scellement comme tel était le cas dans l'art antérieur. Enfin, le canal de remplissage et les espaceurs sont réalisés au moyen du même matériau, ce qui simplifie encore davantage le présent procédé.

Les techniques de photolithographie utilisées dans le cadre de la présente invention sont de type conventionnel et bien connues de l'homme du métier. Elles consistent, pour l'essentiel, à sensibiliser la couche de photorésist au moyen d'une lumière passant par les zones transparentes d'un écran reproduisant les formes des zones à sensibiliser. Quant au matériau photorésist, il s'agit également, de manière très classique, d'une résine photosensible que l'homme du métier pourra sélectionner sans peine, et dont le but habituel est de protéger la surface de la couche à photograver de l'action d'un réactif d'attaque aux endroits où cette résine subsiste après sensibilisation par le rayonnement optique et élimination chimique des zones recouvrant les endroits à graver. On peut citer comme matériaux bien adaptés pour réaliser les cloisons 10 et 12 le cyclotène photosensible de chez Dow Chemical et le produit commercialisé sous la référence SU8 par MicroChem Corp.

Bien entendu, si les exigences sur le positionnement du cadre de scellement sont moins strictes, celui-ci pourra être structuré par sérigraphie ou à l'aide d'un distributeur de type seringue et, plus généralement, à l'aide de toute technique d'impression sélective telle que la flexographie ou le dépôt par jet d'encre que l'homme du métier pourra sélectionner sans peine.

Comme cela a été dit ci-dessus, après structuration des cloisons étanches 10 et 12 délimitant le canal de remplissage 20 et, le cas échéant, des espaceurs 14, les deux substrats 4 et 6 sont réunis. On peut alors procéder au remplissage dudit canal 20. Pour ce faire, on commence à faire le vide dans l'enceinte de travail dans laquelle est réalisée la cellule 2. Une fois le vide établi, on dépose une goutte de matière de scellement au-dessus du trou 18 qui communique avec le canal de remplissage 20. Par capillarité, la matière de scellement commence à s'écouler dans le canal 20. Puis on rétablit la pression atmosphérique dans l'enceinte de travail. Sous l'effet de la différence de pression entre le canal de remplissage dans lequel règne un vide assez poussé et la pression atmosphérique, la matière de scellement est chassée jusqu'au fond du canal de remplissage. On notera que, comme le canal de remplissage 20 peut être d'une grande longueur selon la géométrie de la cellule 2, il pourra être séparé en deux ou plusieurs canaux isolés les uns des autres par une paroi et remplis chacun depuis un trou de remplissage 18 correspondant, de façon à raccourcir le chemin que doit parcourir la matière de scellement pour arriver en fond de canal. Bien entendu, selon une variante, on pourrait également pratiquer au moins un trou de remplissage dans la cloison extérieure 10.

Typiquement, la matière utilisée pour sceller la cellule 2 est une résine photosensible qui est introduite à l'état liquide dans le canal de remplissage 20 et qui est ensuite polymérisée par sensibilisation à l'aide d'une lumière ultraviolette à travers le substrat supérieur 4. La matière de scellement doit assurer une fermeture hermétique des bords de la cellule 2 afin de confiner efficacement le cristal liquide et de le protéger des phénomènes de diffusion de gaz de l'atmosphère ambiante. La matière de scellement doit également présenter un pouvoir adhésif afin de permettre de maintenir les deux substrats 4 et 6 ensemble. A titre de variante, la matière de scellement peut également être constituée par une résine qui polymérisera sous l'effet d'une élévation de la température dans l'enceinte de travail. On peut également utiliser comme matière de scellement une colle bicomposant dont les composants durcissent avec le temps ou sous l'effet d'une augmentation de température lorsqu'ils sont mis en présence l'un de l'autre. On peut citer comme matériaux bien adaptés pour réaliser le cadre de scellement selon l'invention les produits Loctite 3492 et Norland Optical Adhesives 61. Une autre famille de colles bien adaptée aux besoins de la présente invention est constituée par les colles cyanoacrylates. Enfin, les résines thermoplastiques peuvent également être utilisées dans le cadre de l'invention.

Une fois la matière de scellement introduite dans le canal de remplissage 20 puis solidifiée, on peut introduire le cristal liquide dans la cellule 2 via le trou de remplissage 16. Avantageusement, l'introduction de la matière de scellement, sa polymérisation, puis l'étape d'introduction du cristal liquide peuvent être effectuées à la suite les unes des autres ou simultanément dans la même machine. Finalement, le trou de remplissage 16 des cristaux liquides est obturé ainsi que l'espace 28 situé à proximité immédiate du trou de remplissage 16, afin de réaliser une continuité de scellement avec les parties de la cloison 12 les plus proches de manière que le scellement soit parfaitement réalisé sur tout le pourtour de la cellule 2. Enfin, des couches supplémentaires telles que des polariseurs peuvent encore être déposées sur les substrats 4 et 6.

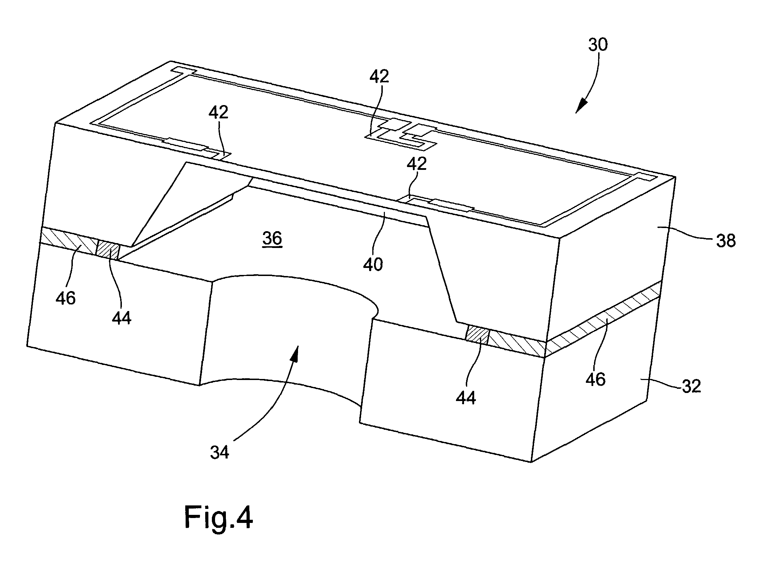

La présente invention s'applique également à des microsystèmes ou MEMS tels que le capteur de pression piézorésistif représenté en coupe à la figure 4. Désigné dans son ensemble par la référence numérique 30, ce capteur se compose d'un substrat inférieur 32 dans lequel est ménagé un conduit d'amenée d'un fluide dont la pression est à mesurer. Ce conduit 34 débouche dans une cavité 36 usinée dans l'épaisseur du substrat supérieur 38 pour former un diaphragme 40 qui constitue l'élément sensible aux variations de pression à mesurer. Sous l'effet d'une telle variation de pression, le diaphragme et des éléments piézorésistifs 42 ménagés sur la face extérieure du substrat supérieur 38 vont se déformer. En se déformant, les éléments piézorésistifs vont produire un signal électrique représentatif de la pression du fluide qui va pouvoir être exploité par un circuit électronique de traitement des données.

Conformément à la présente invention, au moins une cloison 44 est structurée par toute technique appropriée telle que, préférentiellement, par photogravure ou par sérigraphie, par exemple sur le substrat inférieur 32. Le substrat supérieur 38 est ensuite positionné sur le substrat inférieur 32, puis un cordon de matière de scellement 46 est introduit dans l'espace délimité par lesdits deux substrats 32 et 38 et la face externe, opposée au volume actif intérieur du capteur de pression 30, de la cloison 44. La matière de scellement peut être introduite dans l'espace libre entre les deux substrats 32 et 38 soit au moyen d'un distributeur, soit en trempant l'un des bords du capteur de pression 30 dans un récipient empli de matière de scellement, soit encore via un trou percé à l'extérieur du périmètre de la cloison 44 à travers l'un des deux substrats 32 ou 38.

Bien entendu, on peut également envisager le cas où l'on structure, par exemple sur le substrat inférieur 32, deux cloisons s'étendant parallèlement et à distance l'une de l'autre, de façon à délimiter un canal de remplissage dans lequel, après assemblage des deux substrats 32 et 38, on introduira de la matière de scellement via un trou de remplissage percé à travers l'un desdits deux substrats 32 ou 38 et communiquant avec ce canal de remplissage.

La présente invention permet avantageusement de s'affranchir des contraintes liées à la nature des substrats que l'on rencontre habituellement au cours de la fabrication des microsystèmes. En effet, à l'heure actuelle, soit les deux substrats sont de même nature, par exemple en silicium, et dans ce cas ils sont soudés directement l'un à l'autre par le biais d'une réaction chimique qui s'opère à haute température entre les groupes -OH présents dans les couches d'oxydes primitives ou obtenues par croissance qui recouvrent lesdits deux substrats de silicium. Soit l'un des substrats est en silicium et l'autre est typiquement en Pyrex ®, et dans ce cas il faut avoir recours au soudage anodique encore appelé soudage électrostatique qui met en jeu des températures comprises entre 180°C et 350°C et des tensions électriques de l'ordre de 200 à 1'000 volts. Au contraire, grâce à la présente invention, on peut réunir deux substrats indépendamment de leurs natures respectives, dans la mesure où cette opération s'apparente ici à un simple collage au moyen du cordon de matière de scellement. En outre, la présente invention peut être mise en oeuvre sans apport de chaleur ni application d'une tension électrique, ce qui laisse une grande liberté quant au choix des matériaux destinés à être déposés sur les substrats. Au contraire, le soudage de deux substrats, par exemple en silicium, met en jeu des températures de soudage qui peuvent atteindre 1'100°C. Il faut donc, dans ce cas, que les matériaux choisis pour être déposés sur les substrats soient en mesure de résister à ces températures. Malgré le soin apporté dans le choix de ces matériaux, il n'est pas rare que les couches minces s'oxydent ou que des membranes usinées dans le volume de l'un des substrats défléchissent et viennent adhérer sur l'autre substrat.

La présente invention permet également de remplacer des étapes de micro-usinage dans le volume des substrats par des étapes de micro-usinage en surface. En effet, grâce à la présente invention, les divers canaux n'ont plus nécessairement à être aménagés dans l'épaisseur des substrats, mais seulement dans le volume hermétique séparant lesdits deux substrats et délimité par les cloisons.

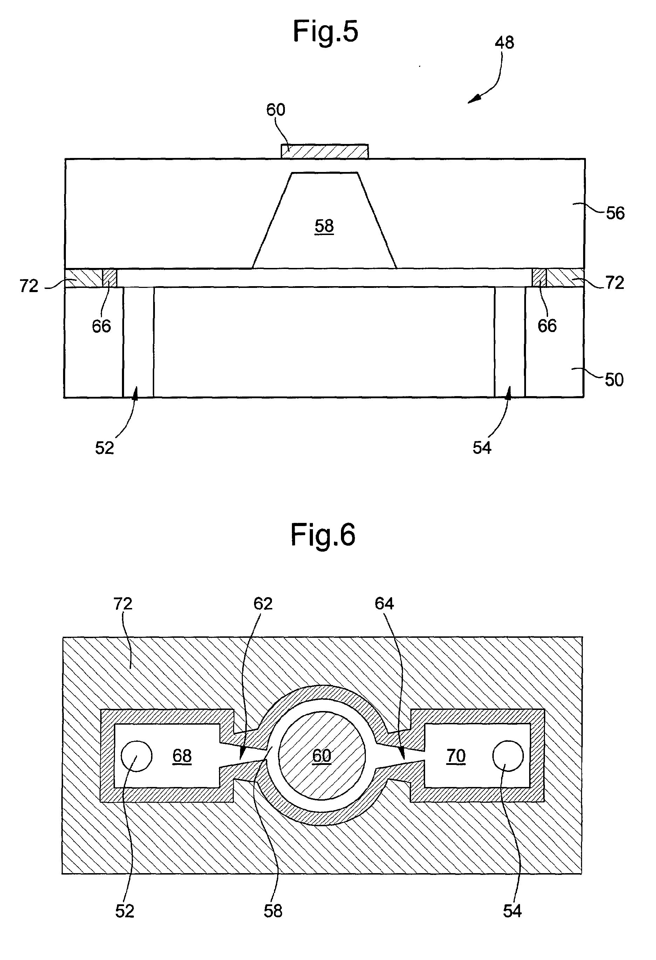

Les figures 5 et 6 sont des vues, respectivement en coupe et du dessus, d'un microsystème du type pompe. Désignée dans son ensemble par la référence numérique 48, cette micropompe présente la particularité de ne pas comporter de valve. Elle se compose d'un substrat inférieur 50 dans lequel sont ménagés un conduit d'amenée 52 et un conduit d'évacuation 54 d'un fluide. Dans le substrat supérieur 56 est ménagée une chambre d'actionnement 58 dont le volume, susceptible de varier, est par exemple contrôlé par un élément piézorésistif 60. Comme on peut le voir sur la figure 6, la chambre d'actionnement 58 communique avec les conduits d'amenée 52 et d'évacuation 54 via deux étranglements, respectivement 62 et 64. Ainsi, lorsque, par exemple, la chambre d'actionnement 58 diminue de volume, le fluide éjecté sort plus facilement par le conduit d'évacuation 54 que par le conduit d'amenée 52 en raison d'une résistance fluidique plus élevée du côté dudit conduit d'amenée 52.

Conformément à l'invention, une cloison 66 est ménagée, par exemple sur le substrat inférieur 50, préférentiellement mais non exclusivement par photolithographie. Cette cloison 66 délimite les cavités 68 et 70 qui mettent en liaison les conduits d'amenée 52 et d'évacuation 54 avec la chambre d'actionnement 58. Comme dans l'exemple décrit en liaison avec la figure 4, l'espace laissé vacant entre les deux substrats 50 et 56 et la face externe de la cloison 66 qui n'est pas en contact avec le fluide est rempli par un cordon de matière de scellement 72. Bien entendu, tout comme mentionné précédemment, on pourrait aussi envisager de structurer à la surface de l'un des deux substrats deux parois s'étendant parallèlement et à distance l'une de l'autre. Ces deux parois délimiteraient ainsi un canal de remplissage qui serait rempli de matière de scellement via un trou de remplissage percé à travers l'un desdits deux substrats.

Il va de soi que la présente invention n'est pas limitée aux modes de réalisation qui viennent d'être décrits, et que diverses modifications et variantes simples peuvent être envisagées sans sortir du cadre de la présente invention. En particulier, l'invention s'applique de manière identique à une cellule comprenant plus de deux substrats, par exemple quatre, les substrats étant réunis deux à deux par un cadre de scellement conforme à l'invention et constitué d'au moins une paroi qui délimite le volume pour le confinement de la matière sensible ou du fluide ainsi que d'un cordon de matière de scellement qui comble l'interstice entre les deux substrats considérés. De même, l'invention peut s'appliquer de manière analogue à un procédé de fabrication en batch de cellules.

## Revendications

1. Procédé de fabrication d'un dispositif (2, 30, 48) délimitant un volume (8) pour le confinement d'un fluide ou d'une matière sensible susceptible de changer de propriétés physiques, notamment optiques, sous l'effet de l'application d'une tension, ou de propriétés électriques sous l'effet d'une contrainte ou d'un rayonnement, ce dispositif (2, 30, 48) comprenant au moins un premier substrat avant (4, 38, 56) et au moins un second substrat arrière (6, 32, 50) maintenus à une distance constante l'un de l'autre, ces deux substrats (6, 32, 50; 4, 38, 56) étant réunis par un joint de scellement (24, 46, 72) qui définit le volume (8) pour le confinement du milieu sensible ou du fluide,
ce procédé étant **caractérisé en ce qu'**il comprend les étapes consistant à :
- structurer sur l'un des substrats (6, 32, 50) au moins une cloison (12, 44, 66) qui délimite par sa face latérale interne le volume (8) pour le confinement du milieu sensible ou du fluide;
- réunir le second substrat (4, 38, 56) avec le premier substrat (6, 32, 50);
- introduire une matière de scellement susceptible de s'écouler dans l'interstice (22) défini par la face latérale externe de la cloison (12, 44, 66) et les deux substrats superposés (6, 32, 50; 4, 38, 56) jusqu'à ce qu'au moins une partie du volume de cet interstice (22) soit occupée par la matière de scellement, et
- solidifier la matière de scellement afin que celle-ci forme le joint de scellement (26, 46, 72).

2. Procédé selon la revendication 1, **caractérisé en ce qu'**il comprend les étapes consistant à :
- structurer sur l'un des substrats (6, 32, 50) au moins un canal de remplissage (20) délimité par deux cloisons (10, 12) qui s'étendent à distance l'une de l'autre;
- réunir le second substrat (4, 38, 56) avec le premier substrat (6, 32, 50);
- introduire une matière de scellement susceptible de s'écouler dans le canal de remplissage (20) jusqu'à ce que tout le volume dudit canal de remplissage (20) soit occupé, et
- solidifier la matière de scellement afin que celle-ci forme le joint de scellement (26, 46, 72).

3. Procédé selon l'une quelconque des revendications 1 ou 2, **caractérisé en ce que** l'on fait pénétrer la matière de scellement dans le canal de remplissage (20) ou l'interstice (22) par capillarité.

4. Procédé selon la revendication 3 en ce qu'elle dépend de la revendication 2, **caractérisé en ce qu'**il comprend les étapes supplémentaires consistant à :
- faire le vide dans le canal de remplissage (20);
- faire pénétrer la matière de scellement dans ledit canal de remplissage (20), et
- rétablir la pression à l'extérieur de la cellule (2, 30, 48) de sorte que, sous l'effet de la différence de pression entre le canal de remplissage (20) dans lequel règne le vide et la pression environnante, la matière de scellement est chassée jusqu'au fond du canal de remplissage (20).

5. Procédé selon l'une quelconque des revendications 1 à 4, **caractérisé en ce que** l'on dépose sur l'un des substrats (6, 32, 50) une couche d'un matériau photorésist que l'on va ensuite structurer par des techniques de photogravure pour lui donner la forme d'une ou de plusieurs cloisons (10, 12; 44, 66).

6. Procédé selon la revendication 5, **caractérisé en ce que** la couche de photorésist est structurée de façon à former, non seulement la ou les cloisons (10, 12), mais également des structures d'espacement (14) destinées à maintenir un écartement constant entre les deux substrats (4, 6) de la cellule (2).

7. Procédé selon l'une quelconque des revendications 1 à 4, **caractérisé en ce que** la ou les cloisons (10, 12; 44, 66) sont structurées par une technique de dépôt sélectif de la matière de scellement.

8. Procédé selon la revendication 7, **caractérisé en ce que** la ou les cloisons (10, 12; 44, 66) sont structurées par sérigraphie.

9. Procédé selon la revendication 7, **caractérisé en ce que** la ou les cloisons (10, 12; 44, 66) sont structurées au moyen d'un distributeur du type seringue.

10. Procédé selon l'une quelconque des revendications 1 à 9, **caractérisé en ce que** la matière de scellement est choisie dans le groupe formé par les résines pouvant être polymérisées par sensibilisation à l'aide d'une lumière ou par chauffage en élevant la température du milieu ambiant, par les colles cyanoacrylates, par les résines thermoplastiques et par les colles bicomposants dont les composants durcissent avec le temps ou sous l'effet d'une augmentation de température lorsqu'ils sont mis en présence l'un de l'autre.

11. Dispositif (2, 30, 48) délimitant un volume (8) pour le confinement d'un fluide ou d'une matière sensible susceptible de changer de propriétés physiques, notamment optiques, sous l'effet de l'application d'une tension, ou de propriétés électriques sous l'effet d'une contrainte ou d'un rayonnement, ce dispositif (2, 30, 48) comprenant au moins un premier substrat avant (4, 38, 56) et au moins un second substrat arrière (6, 32, 50) maintenus à une distance constante l'un de l'autre, ces deux substrats (6, 32, 50; 4, 38, 56) étant réunis par un joint de scellement (24, 46, 72) qui définit le volume (8) pour le confinement du milieu sensible ou du fluide,
ce dispositif étant **caractérisé en ce que** le joint de scellement (26, 46, 72) occupe au moins en partie l'interstice délimité par lesdits substrats et la face externe d'une cloison (12, 44, 66) structurée sur l'un des substrats (4, 38, 56), cette cloison délimitant par sa face latérale interne le volume (8) pour le confinement de la matière sensible ou du fluide.

12. Dispositif selon la revendication 11, **caractérisé en ce que** le joint de scellement (26, 46, 72) est formé par un canal de remplissage (20) délimité par deux parois (10, 12) qui s'étendent à distance l'une de l'autre sur le substrat (6) sur lequel ces parois sont formées, ce canal de remplissage (20) étant destiné à être rempli avec une matière de scellement.

13. Dispositif selon la revendication 12, **caractérisé en ce qu'**au moins un trou (18) communiquant avec le canal de remplissage (20) et permettant l'amenée de la matière de scellement est pratiqué dans l'un des substrats (4, 6) ou dans la paroi (10).

14. Dispositif selon l'une quelconque des revendications 11 à 13, **caractérisé en ce qu'**il constitue une cellule électro-optique, notamment à cristaux liquides, une cellule photovoltaïque électrochimique ou un microsystème de type fluidique.
